# EUROPÄISCHE PATENTSCHRIFT

(11) **EP 3 826 946 B1**
(45) Veröffentlichungstag und Bekanntmachung des Hinweises auf die Patenterteilung: **07.10.2026**
(21) Anmeldenummer: 19708800.8
(22) Anmeldetag: 26.02.2019
(51) Int. Cl.: B65G 43/08, B65G 43/10, B65G 47/71, B65G 47/26, B65G 47/68

(54) **VERFAHREN UND VORRICHTUNG ZUR ZUFÜHRUNG EINES BEHÄLTERMASSENSTROMS AUF WENIGSTENS EINE GASSE**
METHOD AND DEVICE FOR SUPPLYING A CONTAINER MASS FLOW TO AT LEAST ONE LANE
PROCÉDÉ ET DISPOSITIF D'AMENÉE D'UN FLUX MASSIQUE DE CONTENANTS SUR AU MOINS UNE VOIE

(30) Priorität: 24.07.2018 DE 102018212267
(43) Veröffentlichungstag der Anmeldung: 02.06.2021
(73) Patentinhaber: Krones AG, 93073 Neutraubling (DE)
(72) Erfinder: KOLLMUSS, Manuel, 93073 Neutraubling (DE); EHBERGER, Marco, 93073 Neutraubling (DE)
(74) Vertreter: Grünecker Patent- und Rechtsanwälte PartG mbB
(86) Internationale Anmeldenummer: PCT/EP2019/054666
(87) Internationale Veröffentlichungsnummer: WO 2020/020493

(56) Entgegenhaltungen:
- EP-A1- 2 479 123
- DE-A1- 4 332 426
- JP-A- 2017 171 401
- US-A- 3 310 151
- US-A- 3 866 739
- US-A1- 2004 000 464

## Beschreibung

Die Erfindung betrifft ein Verfahren und eine Vorrichtung zur Zuführung eines Behältermassenstroms mit Behältern, insbesondere Kunststoffbehältern, auf wenigstens eine Gasse mit den Merkmalen des Oberbegriffs von Anspruch 1 bzw. 8.

Üblicherweise werden derartige Verfahren und Vorrichtungen dazu eingesetzt, um die Behälter einer Behandlungsmaschine, beispielsweise einer Verpackungsmaschine, in einer oder mehreren Gassen zuzuführen. In den einzelnen Gassen werden die Behälter dabei jeweils als serieller Behälterstrom unmittelbar hintereinander transportiert und können so in der Behandlungsmaschine geordnet verarbeitet werden. Bei den Behältern kann es sich beispielsweise um mit einem Getränk gefüllte Flaschen oder dergleichen handeln, die mit der Verpackungsmaschine zu Gebinden verarbeitet werden.

Dazu werden die Behälter des Behältermassenstroms im Normalbetrieb mit einem Transporteur in einer Transportrichtung beispielsweise stehend transportiert und mit Führungselementen derart zu den Gassen geführt, dass sie darin jeweils als serielle Behälterströme vorliegen. Insbesondere werden die Behälter mittels der Führungselemente zu den einzelnen Gassen hin aufgeteilt.

Um eine störungsfrei Führung der Behälter zu unterstützen, werden üblicherweise Rüttler oder Vibratoren eingesetzt, die verhindern sollen, dass im Eindrängelbereich der Führungselemente keine Verklemmung der Behälter stattfinden. Darüber hinaus ist eine oszillierende Bewegung der Führungselemente bekannt, um derartige Verklemmungen zu verhindern.

Allerdings kann es in seltenen Fällen vorkommen, dass es im Eindrängelbereich der Führungselemente zu einer Verklemmung der Behälter des Behältermassenstroms kommt, die mit den bekannten Maßnahmen nicht selbstständig aufgelöst werden kann. In derartigen Fällen muss dann der Normalbetrieb unterbrochen werden, sodass das Bedienpersonal die Verklemmung manuell lösen kann. Beispielsweise kann eine derartige Verklemmung eine Blockade sein.

Eine derartige Verklemmung tritt häufiger bei Kunststoffbehältern auf, da sie gegenüber Glasflaschen verformbarer sind und dadurch beim Eindrängeln einen größeren Oberflächenkontakt zueinander als auch teilweise zu den Führungselementen bilden. Dadurch weisen die Kunststoffbehälter eine erhöhte Haftwirkung beim Eindrängeln auf, so dass sie leichter verklemmen können. Dies tritt beispielsweise bei PET-Flaschen auf.

Die EP 2479123 A1 offenbart eine Vorrichtung nach dem Oberbegriff des Anspruchs 8 und ein Verfahren nach dem Oberbegriff des Anspruchs 1.

Aufgabe der vorliegenden Erfindung ist es daher, ein Verfahren und eine Vorrichtung zur Zuführung eines Behältermassenstroms auf wenigstens eine Gasse bereitzustellen, bei denen Verklemmungen automatisch gelöst werden können.

Zur Lösung dieser Aufgabenstellung stellt die Erfindung ein Verfahren zur Zuführung eines Behältermassenstroms mit Behältern, insbesondere Kunststoffbehältern, auf wenigstens eine Gasse mit den Merkmalen des Anspruchs 1 bereit. Vorteilhafte Ausführungsformen der Erfindung sind in den Unteransprüchen genannt.

Dadurch, dass die Verklemmung der Behälter im Eindrängelbereich der Führungselemente mittels der Erkennungseinrichtung erkannt wird, kann darauf automatisch reagiert werden, indem der Transport aufgrund der Verklemmung für das Zeitintervall in den Reversierbetrieb geschaltet wird. Dadurch wird der Staudruck des Behältermassenstroms gegen die Führungselemente entlastet und die verklemmten Behälter werden ein Stück rückwärts transportiert. Folglich wird die Verklemmung automatisch gelöst, sodass die Behälter des Behältermassenstroms anschließend wieder ordnungsgemäß zu der wenigstens einen Gasse geführt werden können. Dadurch ist bei dem erfindungsgemäßen Verfahren keine Unterbrechung und kein manueller Eingriff einer Bedienperson notwendig, um die Verklemmung zu lösen.

Bei umfangreichen Untersuchungen der Anmelderin hat sich herausgestellt, dass eine ungünstige Anordnung der Behälter unmittelbar vor den Führungselementen die Verklemmung verursacht. Die Behälter blockieren sich dabei gegenseitig so, dass sie nicht in der Weise ausweichen können, dass sie sich anschließend in die Gassen eindrängeln. Folglich entsteht ein hoher Druck was ein Lösen der verklemmten Behälter nicht möglich macht. Durch den Reversierbetrieb löst sich der Druck der verklemmten Behälter in der Form, dass auch deren Position mit sehr hoher Wahrscheinlichkeit nicht mehr der vorherigen, zu der Verklemmung führenden Position, entspricht. Demnach wird durch den Reversierbetrieb kurzzeitig ein gewisser Freiraum erzeugt, welcher zulässt, dass die Behälter ihre Position auf dem Transporteur verändern können, um die Verklemmung zu lösen.

Das Verfahren zur Zuführung des Behältermassenstroms auf die wenigstens eine Gasse kann in einer Getränkeverarbeitungsanlage eingesetzt werden. Insbesondere können die Behälter über die wenigstens eine Gasse einer Behandlungsmaschine zugeführt werden, insbesondere einer Verpackungsmaschine. Anders ausgedrückt können die in der wenigstens einen Gasse jeweils als serieller Behälterstrom vorliegenden Behälter als Gebinde verpackt werden, beispielsweise als Kartonverpackungen oder als Schrumpfgebinde. Denkbar ist, dass die Behälter mit einer Streckblasmaschine hergestellt, einer Etikettiermaschine etikettiert, einem Füller befüllt und/oder mit einem Verschließer verschlossen werden, bevor sie als Behältermassenstroms mit dem Transporteur transportiert und mit den Führungselementen zu der wenigstens einen Gasse geführt werden. Denkbar ist, dass das Verfahren zur Zuführung des Behältermassenstroms auf die wenigstens eine Gasse automatisch mit einer Steuerungseinheit durchgeführt wird.

Die Behälter können dazu vorgesehen sein, Getränke, Nahrungsmittel, Hygieneartikel, Pasten, chemische, biologische und/oder pharmazeutische Produkte aufzunehmen. Die Behälter können Kunststoffflaschen, Glasflaschen und/oder Dosen sein. Bei Kunststoffbehältern kann es sich speziell um PET-, PEN-, HD-PE oder PP-Behälter bzw. Flaschen handeln. Ebenso kann es sich um biologisch abbaubare Behälter oder Flaschen handeln, deren Hauptbestandteile aus nachwachsenden Rohstoffen wie z. B. Zuckerrohr, Weizen oder Mais bestehen. Denkbar ist, dass es sich bei den Behältern, insbesondere den Kunststoffbehältern um rotationssymmetrische Behälter oder um von der Rotationssymmetrie abweichende Formbehälter handelt. Beispielsweise kann es sich um Formbehälter mit einem rechteckigen oder quadratischen Querschnitt handeln. Das Verfahren ist besonders für Formbehälter geeignet, da sich diese beim Eindrängeln leichter verkeilen können.

Vorzugsweise werden die Behälter des Behältermassenstroms im Eindrängelbereich der Führungselemente mit dem Transporteur linear transportiert. Beispielsweise kann es sich bei dem Transporteur um ein Förderband handeln, auf dem die Behälter des Behältermassenstroms stehend transportiert werden. Denkbar ist jedoch auch, dass die Behälter des Behältermassenstroms im Eindrängelbereich der Führungselemente mit dem Transporteur entlang einer gekrümmten Bahn transportiert werden, insbesondere entlang einer Kreisbahn. Denkbar ist, dass die Behälter des Behältermassenstroms vom Transporteur mit mehreren parallelen Transportbändern transportiert werden, von denen genau eines oder ein Teil beim Reversierbetrieb umgeschaltet werden, so dass die Behälter des Behältermassenstroms nur teilweise entgegen der Transportrichtung transportiert werden, um die Verklemmung zu lösen. Denkbar ist jedoch auch, dass alle parallelen Transportbänder des Transporteurs beim Reversierbetrieb umgeschaltet werden.

Der Eindrängelbereich kann den Führungselementen direkt vorgelagert sein. Denkbar ist also, dass die Behälter im Eindrängelbereich mit Vorderkanten der Führungselemente erfasst und dadurch gegenüber der Transportrichtung seitlich verschoben werden. Insbesondere kann es sich beim Eindrängelbereich um einen Transportabschnitt des Transporteurs handeln, der den Führungselementen unmittelbar vorgelagert ist. Der Transportabschnitt mit dem Eindrängelbereich kann in Transportrichtung eine Länge 0,05 - 1 Meter, insbesondere von 0,05 - 0,5 Metern aufweisen. Denkbar ist auch, dass die Länge des Eindrängelbereichs in Transportrichtung in einem Bereich von 1 - 5 Behälterdurchmessern, insbesondere in einem Bereich von 1 - 3 Behälterdurchmessern liegt. Mit Behälterdurchmesser kann der Durchmesser der Behälter gemeint sein. Bei einem nicht rotationssymmetrischen Behälter kann der größte Querschnittswert der Behälter in Querrichtung zu einer Behälterlängsachse gemeint sein.

Die Führungselemente können zueinander justiert werden, um sie auf verschiedene Behältergrößen anzupassen. Beispielsweise können die Führungselemente als Führungsbleche ausgebildet sein, die insbesondere vertikal angeordnet sind. Mit "vertikal" kann hier die Richtung gemeint sein, die auf den Erdmittelpunkt zeigt. Die Führungselemente können mit Rollen ausgebildet sein, um ein besseres Entlanggleiten der Behälter an den Führungselementen zu unterstützen. Vorzugsweise können die Führungselemente wenigstens teilweise oder ganz entlang des Transporteurs angeordnet sein und/oder wenigstens teilweise in der Transportrichtung trichterartig aufeinander zu laufen. Beispielsweise können die Führungselemente vertikal oberhalb einer Transportfläche des Transporteurs angeordnet sein, um die Behälter zu führen Denkbar ist auch, dass ein Teil der Führungselemente die Behälter des Behältermassenstroms unmittelbar vor oder am Eindrängelbereich trichterartig zusammenführt. Bei der Transportfläche des Transporteur kann es sich beispielsweise um die vertikal oben angeordnete Oberfläche eines Transportbands handeln. Mit "vertikal" kann hier die Richtung gemeint sein, die auf den Erdmittelpunkt zeigt. Denkbar ist, dass die Führungselemente wenigstens teilweise über Klemmelemente mit einer oder mehreren Querschienen verbunden sind, wobei die eine oder mehrere Querschienen quer zur Transportrichtung des Transporteurs angeordnet sind. Dadurch können die Führungselemente besonders einfach an verschiedene Behältergrößen angepasst werden. Denkbar ist, dass die Führungselemente kaskadenartig angeordnet sind. Insbesondere können die Behälter des Behältermassenstroms zunächst auf Zwischengassen mit mehreren Behältern nebeneinander, beispielsweise Dreiergassen oder Doppelgassen aufgeteilt werden, in denen entsprechend drei oder zwei Behälter nebeneinander transportiert werden, wobei die Behälter von den Zwischengassen anschließend auf die Gassen aufgeteilt werden, in denen sie jeweils als serieller Behälterstrom vorliegen. Dies ist insbesondere bei besonders vielen Gassen von Vorteil, da sich die Behälter dann seltener verklemmen. Die Führungselemente können entlang des Transporteurs und/oder eines dem Transporteur nachfolgenden Gassentransporteurs angeordnet sein.

Denkbar ist, dass es sich bei der wenigstens einen Gasse um mehrere Gassen handelt und, dass die Behälter des Behältermassenstroms mit den Führungselementen derart zu den Gassen geführt werden, dass sie in den Gassen jeweils als serieller Behälterstrom vorliegen. Vorzugsweise können die Gassen dann parallel zueinander verlaufen, insbesondere parallel zur Transportrichtung. Beispielsweise kann die wenigstens eine Gasse wenigstens teilweise durch die Führungselemente gebildet werden. Denkbar ist auch, dass der in der wenigstens einen Gasse jeweils seriell vorliegende Behälterstrom anschließend an die Führungselemente mit weiteren Leitelementen geführt wird. Insbesondere kann die wenigstens eine Gasse jeweils beidseitig durch die Führungselemente und/oder die daran anschließenden Leitelemente gebildet werden.

Denkbar ist, dass die Erkennungseinrichung in Transportrichtung dem Eindrängelbereich vor-, zu- oder nachgeordnet ist. Die Verklemmungen kann mit einem Zeilensensor, einem Reflexsensor und/oder einer Kamera der Erkennungseinrichtung erkannt werden. Beispielsweise kann der Zeilensensor mit wenigstens einer Lichtschranke arbeiten, um eine fortlaufende Bewegung des jeweiligen seriellen Behälterstroms in der wenigstens einen Gasse zu erkennen. Der Reflexsensor kann beispielsweise als Abstandssensor ausgebildet sein und/oder von vertikal oberhalb der Behälter auf den Transporteur ausgerichtet sein. Dabei werden die Behälter zwischen dem Reflexsensor und dem Transporteur hindurchgefahren und erzeugen so ein Detektionssignal. Denkbar sind auch mechanische Sensoren, wie Schwenkklappen oder dergleichen, wie sie aus der DE 202 08 127 U1, EP 2 571 791 B1 und US 4,216,855 bekannt sind. Die Schwenkklappen können sowohl in Transportrichtung als auch entgegengesetzt schwenkbar ausgebildet sein, um die Behälter zusätzlich bei dem Reversierbetrieb zu erfassen. Denkbar ist, dass die Erkennungseinrichtung beim Eindrängeln einen umgefallen Behälter erkennt, der die Verklemmung verursacht und insbesondere ein Fehlersignal an die Steuerungseinheit abgibt. Denkbar ist auch, dass die Erkennungseinrichtung einen Gewichtssensor umfasst, um die Verklemmung zu erkennen. Beispielsweise könnte der Transporteur mit dem Gewichtssensor die Anzahl der Behälter in einem Gewichtserfassungsabschnitt der wenigstens einen Gasse erfassen. Falls es nun zu der Verklemmung kommt, würde das Gewicht abnhemen, da in dem Gewichtserfassungsabschnitt weniger oder gar keine Behälter mehr transportortier werden.

Denkbar ist, dass die Erkennungseinrichtung für die Verklemmung den kompletten Behälterstrom von einer ersten Aufteilung an den Führungselementen bis hin zu den Gassen gleichzeitig überwacht. Dadurch kann die Erkennung noch zuverlässiger arbeiten. Ebenso ist denkbar, dass die Erkennungseinrichtung nur einen einzelnen Sensor mit einem Messpunkt für jeweils eine Gasse aufweist. Dadurch kann die Erkennungseinrichtung besonders kostengünstig aufgebaut werden.

Ebenso ist denkbar, dass die Behälter mit der Kamera der Erkennungseinrichtung erfasst werden und die Kamerabilder dann mittels Bildverarbeitung ausgewertet werden, um die Position und/oder Lage der einzelnen Behälter im Eindrängelbereich der Führungselemente auszuwerten. Beispielsweise kann mit dem Zeilensensor, dem Reflexsensor und/oder der Kamera der Erkennungseinrichtung eine Lücke in dem jeweiligen seriellen Behälterstrom bestimmt werden, um die Verklemmung zu erkennen. Ebenso ist denkbar, dass der Eindrängelbereich mit einer Kamera erfasst wird, wobei die Kamerabilder dann mittels der Bildverarbeitung auf Eindrängelbewegungen der Behälter hin ausgewertet werden. Bei einer Verklemmung kann aus einem längerem Stillstand wenigstens eines Teils der Behälter im Behältermassenstrom auf die Verklemmung geschlossen werden. Der Transporteur kann mit einer Steuerungseinheit angesteuert werden, um ihn zwischen dem Normalbetrieb und dem Reversierbetrieb umzuschalten. Bei der "Transportrichtung" kann es sich um eine Richtung handeln, bei der die Behälter in der wenigstens einen Gasse jeweils als der serielle Behälterstrom der Behandlungsmaschine, insbesondere der Verpackungsmaschine zugeführt werden.

Denkbar ist, dass die Behälter des Behältermassenstroms vor dem Eindrängelbereich von einem Zubringertransporteur an den Transporteur quer zur Transportrichtung übergeben werden. Anders ausgedrückt können die Behälter des Behältermassenstroms bei der Übergabe vom Zubringertransporteur zum Transporteur quer zur Transportrichtung verschoben werden. Dadurch können die Behälter des Behältermassenstroms beim Normalbetrieb vorgeordnet und beim Reversierbetrieb gegenüber den Behältern auf dem Zubringertransporteur ausweichen, so dass sie dabei nicht entgegen dessen Transportdruck gedrückt werden. Ein Endabschnitt des Zubringertransporteurs und ein Anfangsabschnitt des Transporteurs können in Transportrichtung parallel nebeneinander angeordnet sein. Denkbar ist, dass wenigstens ein Leitelement die Behälter vom Zubringertransporteur quer zur Transportrichtung zum Transporteur hin drückt.

Der Transporteur wird nach Ablauf des Zeitintervalls wieder in den Normalbetrieb zurückgeschaltet, bei dem die Behälter des Behältermassenstroms mit dem Transporteur wieder in der Transportrichtung transportiert werden. Dadurch werden die Behälter nach Lösung der Verklemmung wieder wie vorgesehen mit den Führungselementen zu der wenigstens einen Gasse geführt.

Es wäre auch denkbar, dass nach dem Zurückschalten in den Normalbetrieb mit der Erkennungseinrichtung erkannt wird, ob sich die Verklemmung der Behälter im Eindrängelbereich der Führungselemente gelöst hat und, dass der Transporteur für wenigstens ein weiteres Zeitintervall in den Reversierbetrieb geschaltet wird, um die Verklemmung zu lösen. Dadurch kann eine sich beim erstmaligen Reversierbetrieb nicht gelöste Verklemmung durch einen mehrfachen Reversierbetrieb gelöst werden. Anders ausgedrückt könnte der Transporteur aufgrund der Verklemmung mehrfach in den Reversierbetrieb geschaltet werden, insbesondere in Abwechslung mit dem Normalbetrieb, um die Verklemmung zu lösen. In seltenen Fällen könnte es nach Lösen der Verklemmung zu einer weiteren Verklemmung mit anderen Behältern kommen, die dann erneut mit der Erkennungseinrichtung erkannt wird, wobei der Transporteur aufgrund der weiteren Verklemmung erneut für ein weiteres Zeitintervall in den Reversierbetrieb geschaltet wird, um die weitere Verklemmung zu lösen.

Der Transporteur wird nach Ablauf des Zeitintervalls in einen Schnellbetrieb geschaltet, bei dem die Behälter mit dem Transporteur des Behältermassenstroms gegenüber dem Normalbetrieb schneller transportiert werden, um eine durch den Reversierbetrieb entstandene Transportlücke des seriellen Behälterstroms und/oder des Behältermassenstroms zu schließen. Da durch den Reversierbetrieb die Behälter nicht wie vorgesehen transportiert werden, entsteht dabei im Behältermassenstrom und/oder im seriellen Behälterstrom eine Lücke zwischen den Behältern, wodurch die nachfolgende Behandlung gestört werden könnte. Die Transportlücke wird durch den Schnellbetrieb wieder geschlossen, so dass die Behälter dann wieder ordnungsgemäß der nachfolgenden Behandlungsmaschine zugeführt werden und eine Störung verhindert wird. Anschließend an den Schnellbetrieb kann der Transporteur wieder in den Normalbetrieb geschaltet werden, bei dem die Behälter des Behältermassenstroms mit dem Transporteur wieder in der Transportrichtung normal transportiert werden. Mit "normal transportiert" kann hier gemeint sein, dass die Behälter mit einer durchschnittlichen Transportgeschwindigkeit eines störungsfreien Betriebszeitraums transportiert werden. Mit "schneller transportiert" kann hier gemeint sein, dass die Behälter mit einer gegenüber der durchschnittlichen Transportgeschwindigkeit schnelleren Geschwindigkeit transportiert werden.

Zusätzlich ist denkbar, dass ein Gassentransporteur während und/oder nach Ablauf des Zeitintervalls in einen Langsambetrieb geschaltet wird, bei dem die Behälter in der wenigstens einen Gasse gegenüber einem Normalbetrieb langsamer transportiert werden, um eine durch den Reversierbetrieb entstandene Transportlücke des seriellen Behälterstroms und/oder des Behältermassenstroms zu schließen. Durch diese Vorgehensweise ist es ebenfalls möglich, dass die Transportlücke geschlossen wird und die Behälter der nachfolgenden Behandlungsmaschine nach dem Lösen der Verklemmung wieder ordnungsgemäß zugeführt werden. Denkbar ist, dass der Gassentransporteur anschließend an den Transporteur angeordnet ist und die Behälter in der wenigstens einen Gasse bis wenigstens zur Behandlungsmaschine transportiert. Mit "langsamer transportiert" kann hier gemeint sein, dass die Behälter mit einer gegenüber der durchschnittlichen Transportgeschwindigkeit langsameren Geschwindigkeit transportiert werden. Denkbar ist auch, dass der Transporteur für den Behältermassenstrom gleichzeitig mit dem Langsambetrieb des Gassentransporteurs wieder in den Normalbetrieb geschaltet wird, bei dem die Behälter des Behältermassenstroms in Transportrichtung normal transportiert werden.

Erfindungsgemäß liegt das Zeitintervall in einem Bereich von 0,1 - 2 Sekunden, insbesondere in einem Bereich von 0,1 - 1 Sekunde und/oder entspricht einer vordefinierten Wegstrecke in einem Bereich von 0,01 - 1 Meter, die die Behälter im Reversierbetrieb zurücklegen, insbesondere in einem Bereich von 0,01 - 0,5 Meter. Dadurch wird der Transport im Normalbetrieb nur kurzzeitig unterbrochen, sodass die durch den Reversierbetrieb entstehende Transportlücke besonders klein ist. Denkbar ist, dass die Wegstrecke in Abhängigkeit einer Abmessung der Behälter vordefiniert ist, beispielsweise in Abhängigkeit eines Behälterdurchmessers.

Die Behälter des Behältermassenstroms können im Eindrängelbereich der Führungselemente mit einer Rütteleinrichtung geschüttelt werden und/oder die Führungselemente können mit einer Vibrationseinrichtung oszillierend bewegt werden, um die Zuführung der Behälter zu der wenigstens einen Gasse zu unterstützen. Durch die Rütteleinrichtung und/oder die Vibrationseinrichtung können die Behälter und/oder die Führungselemente derart in Schwingungen versetzt werden, dass ein Eindrängeln der Behälter in die wenigstens eine Gasse, insbesondere in die Gassen unterstützt wird. Denkbar ist auch, dass sich die Behälter dadurch an den Führungselementen leichter abrollen. Dadurch wird die Anzahl der tatsächlich auftretenden Verklemmungen verringert. Darüber hinaus stellt Erfindung zur Lösung der Aufgabenstellung eine Vorrichtung zur Zuführung eines Behältermassenstroms mit Behältern, insbesondere Kunststoffbehältern, auf wenigstens eine Gasse mit den Merkmalen des Anspruchs 8 bereit. Vorteilhafte Ausführungsformen der Erfindung sind in den Unteransprüchen genannt.

Dadurch, dass die Vorrichtung die Erkennungseinrichtung für die Verklemmung der Behälter im Eindrängelbereich der Führungselemente umfasst, kann die Verklemmung erkannt und darauf automatisch reagiert werden. Dadurch, dass die Steuereinrichtung dazu ausgebildet ist, aufgrund der Verklemmung den Transporteur für das Zeitintervall in den Reversierbetrieb zu schalten, wird der Staudruck des Behältermassenstroms gegen die Führungselemente entlastet und die verklemmten Behälter werden ein Stück rückwärts transportiert. Dadurch wird die Verklemmung automatisch gelöst, sodass die Behälter des Behältermassenstroms anschließend wieder ordnungsgemäß zu der wenigstens einen Gasse geführt werden können. Folglich ist bei der erfindungsgemäßen Vorrichtung keine Unterbrechung und kein manueller Eingriff einer Bedienperson notwendig, um die Verklemmung zu lösen.

Die Vorrichtung ist zur Durchführung des zuvor beschriebenen Verfahrens zur Zuführung eines Behältermassenstroms auf wenigstens eine Gasse ausgebildet.

Die Steuerungseinheit kann als Maschinensteuerung mit einem Mikroprozessor, einem Speicher, einem Bildschirm und/oder mit einer Eingabeeinheit ausgebildet sein. Die Steuerungseinheit kann über Steuer- und/oder Signalleitungen mit dem Transporteur, dem Gassentransporteur und/oder der Erkennungseinrichtung verbunden sein.

Die Vorrichtung kann in einer Getränkeverarbeitungsanlage angeordnet sein. Insbesondere kann die Vorrichtung eine Behandlungsmaschine, insbesondere eine Verpackungsmaschine umfassen, wobei die wenigstens eine Gasse in einem Zulauf der Verpackungsmaschine angeordnet ist. Denkbar ist, dass die Vorrichtung weitere Behandlungsmaschinen umfassen, wie beispielsweise eine Streckblasmaschine, eine Etikettiermaschine, einen Füller und/oder einen Verschließer. Der Transporteur kann im Eindrängelbereich der Führungselemente als Lineartransporteur ausgebildet sein. Dadurch können die Behälter besonders gut stehend transportiert und mittels der Führungselemente geführt werden. Vorzugsweise kann der Lineartransporteur ein Transportband umfassen, auf dem die Behälter stehend transportiert werden.

Die Erkennungseinrichtung kann einen Zeilensensor, einen Reflexsensor oder eine Kamera umfassen, um die Verklemmung zu erkennen. Dadurch kann die Verklemmung besonders zuverlässig optisch erkannt werden. Der Zeilensensor kann eine oder mehrere Lichtschranken umfassen, um eine Lücke im seriellen Behälterstrom zu erkennen. Denkbar ist auch, dass die Vorrichtung eine Bildverarbeitungseinrichtung umfasst, um Kamerabilder der Kamera bezüglich der Lage und Position der Behälter auszuwerten. Der Reflexsensor kann als Abstandssensor ausgebildet sein.

Die Vorrichtung kann eine Rütteleinrichtung umfassen, um die Behälter des Behältermassenstroms im Eindrängelbereich der Führungselemente zu schütteln. Ebenso ist denkbar, dass die Vorrichtung eine Vibrationseinrichtung umfasst, um die Führungselemente oszillierend zu bewegen. Dadurch wird eine seitliche Bewegung der Behälter quer zur Transportrichtung unterstützt, so dass die Verklemmung der Behälter seltener auftritt. Denkbar ist, dass der Transporteur die Rütteleinrichtung umfasst, beispielsweise um ein Förderband für die Behälter zu rütteln.

Weitere Merkmale und Vorteile der Erfindung werden nachfolgend anhand der in den Figuren dargestellten Ausführungsbeispiele näher erläutert. Dabei zeigt:
- Figur 1: ein erfindungsgemäßes Ausführungsbeispiel eines Verfahrens zur Zuführung eines Behältermassenstroms mit Behältern auf wenigstens eine Gasse als Flussdiagram; und
- Figuren 2A - 2E: ein erfindungsgemäßes Ausführungsbeispiel einer Vorrichtung zur Zuführung eines Behältermassenstroms mit Behältern auf wenigstens eine Gasse beim Lösen einer Verklemmung von Behältern als Draufsicht.

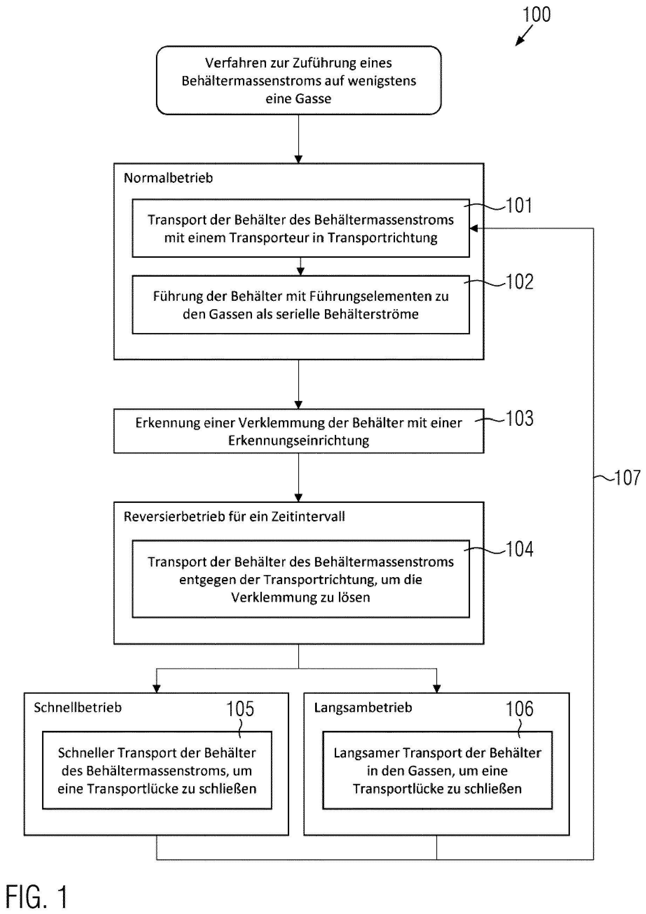

In der Figur 1 ist ein erfindungsgemäßes Ausführungsbeispiel eines Verfahrens 100 zur Zuführung eines Behältermassenstroms mit Behältern auf wenigstens eine Gasse als Flussdiagramm dargestellt. Bei den Behältern kann es sich insbesondere um Kunststoffbehälter, wie beispielsweise PET-Flaschen handeln.

Zu sehen ist, dass im Schritt 101 die Behälter des Behältermassenstroms mit einem Transporteur in Transportrichtung transportiert werden. Beispielsweise werden die Behälter des Behältermassenstroms stehend auf einem linearen Förderband transportiert.

Dabei werden die Behälter des Behältermassenstroms im Schritt 102 mit Führungselementen zu mehreren Gassen geführt, so dass sie darin jeweils als serieller Behälterstrom vorliegen. Alternativ ist bei dem Verfahren auch denkbar, dass die Behälter des Behältermassenstroms mit den Führungselementen zu nur einer Gasse geführt werden, sodass sie darin ebenfalls als serieller Behälterstrom vorliegen. Mit "serieller Behälterstrom" ist hier gemeint, dass die Behälter in der jeweiligen Gasse sequenzielle hintereinander stehend transportiert werden und insbesondere dass sie innerhalb einer Gasse nur hintereinander und nicht nebeneinander transportiert werden.

Um die Zuführung der Behälter zu den Gassen zu unterstützen, kann dabei vorgesehen sein, die Behälter des Massenstroms im Eindrängelbereich der Führungselemente mit einer Rütteleinrichtung zu schütteln. Denkbar ist auch, dass die Führungselemente mit einer Vibrationseinrichtung oszillierend bewegt werden. Dadurch wird eine seitliche Bewegung der Behälter auf dem Transporteur im Eindrängelbereich der Führungselemente unterstützt, so dass das Einfädeln in die Gassen erleichtert wird.

Anschließend können die Behälter über die Gassen einer Verpackungsmaschine zugeführt werden, um sie als Gebinde zu verpacken. Da die Behälter in den Gassen jeweils als serieller Behälterstrom vorliegen, können Sie mit der Verpackungsmaschine zueinander in einem Raster angeordnet verpackt werden.

Es kann jedoch in seltenen Fällen vorkommen, dass die Behälter im Eindrängelbereich der Führungselemente Verklemmen. Dies wird im Schritt 103 mit einer Erkennungseinrichtung erkannt. Beispielsweise kann dazu ein Zeilensensor, ein Reflexsensor oder eine Kamera der Erkennungseinrichtung über den Führungselementen und/oder den Gassen angeordnet sein, um die Verklemmung optisch zu erkennen. Beispielsweise entsteht in den Gassen durch die Verklemmung eine Lücke in einem oder mehreren der seriellen Behälterströme, die dann mit der Erkennungseinrichtung erkannt werden kann.

Wird nun die Verklemmung erkannt, so wird der Transporteur im Schritt 104 aufgrund der Verklemmung für ein Zeitintervall von 0,1 - 2 Sekunden, insbesondere in einem Bereich von 0,1 - 1 Sekunde in einen Reversierbetrieb geschaltet, so dass die Behälter des Behältermassenstroms rückwärts entgegen der Transportrichtung transportiert werden. Dadurch werden diejenigen Behälter, die die Verklemmung bilden, vom Transportdruck des Behältermassenstroms entlastet und von den Führungselementen weg transportiert, sodass die Verklemmung gelöst wird. Allerdings entsteht durch den Reversierbetrieb eine Transportlücke im seriellen Behälterstrom der Gassen. Daher wird der Transporteur im Schritt 105 nach Ablauf des Zeitintervalls in einen Schnellbetrieb geschaltet, bei dem die Behälter des Behältermassenstroms gegenüber dem Normalbetrieb schneller transportiert werden, um die durch den Reversierbetrieb entstandene Transportlücke zu schließen.

Alternativ dazu und nicht Teil der Erfindung ist denkbar, dass gemäß Schritt 106 ein nachfolgender Gassentransporteur nach Ablauf des Zeitintervalls in einen Langsambetrieb geschaltet wird, bei dem die Behälter in den Gassen gegenüber dem Normalbetrieb langsamer transportiert werden, um die durch den Reversierbetrieb entstandene Transportlücke des seriellen Behälterstroms zu schließen. Beispielsweise kann der Gassentransporteur im Bereich der Gassen anschließend an den zuvor genannten Transporteur angeordnet sein.

Darüber hinaus wird der Transporteur für die Behälter des Behältermassenstroms nach dem Schritt 105 oder gleichzeitig mit dem Schritt 106 wieder in den Normalbetrieb geschaltet, so dass die Behälter in den Schritten 101 und 102 wieder in Transportrichtung transportiert und mit den Führungselementen zu den Gassen geführt werden. Falls nun eine weitere Verklemmung auftritt, so werden die zuvor beschriebenen erneut durchlaufen (Verzweigung 107).

Die Schritte 103-106 bzw. die Verzweigung 107 können mittels einer Steuerungseinheit automatisch abgearbeitet werden, da dabei die Erkennungseinrichtung elektronisch abgefragt und der Transporteur entsprechend angesteuert werden kann. Folglich wird die Verklemmung automatisch gelöst, sodass die Behälter des Behältermassenstroms anschließend wieder ordnungsgemäß zu der wenigstens einen Gasse geführt werden können. Folglich ist bei dem erfindungsgemäßen Verfahren keine Unterbrechung und kein manueller Eingriff einer Bedienperson notwendig, um die Verklemmung zu lösen.

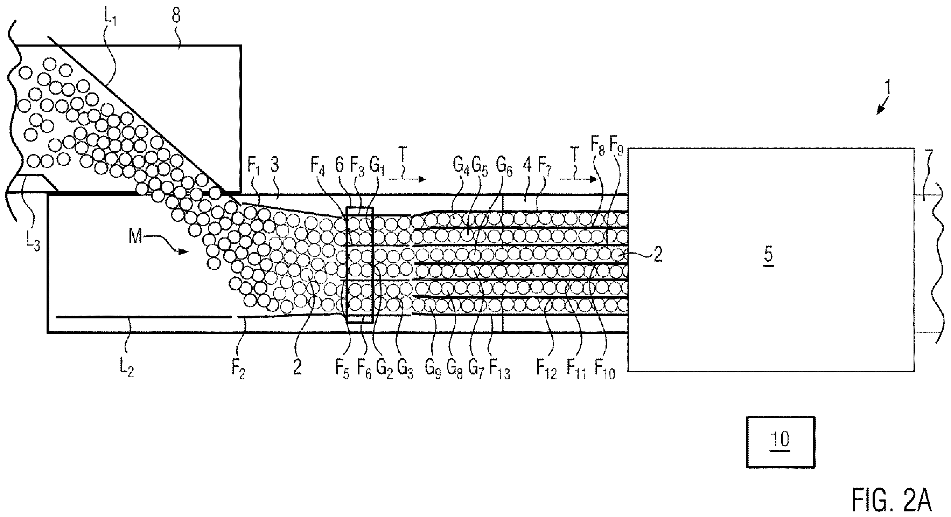

In den Figuren 2A - 2E ist ein erfindungsgemäßes Ausführungsbeispiel einer Vorrichtung 1 zur Zuführung eines Behältermassenstroms M mit Behältern 2 auf wenigstens eine Gasse G₁ - G₉ beim Lösen einer Verklemmung V von Behältern 2 in einer Draufsicht dargestellt. Bei den Behältern 2 kann es sich insbesondere um Kunststoffbehälter, wie beispielsweise PET-Flaschen handeln.

Zu sehen ist ein Zubringertransporteur 8 und die Leitelemente L₁ - L₃, wobei der Endabschnitt des Zubringertransporteurs 8 neben dem Anfangsabschnitt des Transporteurs 3 angeordnet ist. In diesem Bereich werden die Behälter 2 mit dem Leitelement L₁ quer zur Transportrichtung T vom Zubringertransporter 8 zum Transporteur 3 hin verschoben. Dadurch wird der Behältermassenstrom M teilweise zusammengeschoben, so dass die Behälter 2 bereits vorgeordnet auf dem Transporteur 3 transportiert werden.

Zu sehen ist der Transporteur 3 zum Transport der Behälter 2 des Behältermassenstroms M, an dem die Führungselemente F₁ - F₁₃ angeordnet sind, um die Behälter 2 des Behältermassenstroms M in Transportrichtung T zu den Gassen G₁ - G₉ zu führen.

Zu sehen sind zunächst zwei seitliche Führungselemente F₁ - F₂, mit denen der gesamte Behältermassenstrom M auf dem Transporteur 3 in der Breite trichterartig zusammengeführt wird. Daran anschließend sind die Führungselemente F₃ - F₆ und F₇ - F₁₃ zu sehen, mit denen der Behältermassenstrom M kaskadenartig zunächst auf drei Doppelgassen G₁ - G₃ und dann auf die Gassen G₄ - G₉ zu jeweils einem seriellen Behälterstrom geführt wird. In den Gassen G₄ - G₉ stehen die Behälter 2 jeweils unmittelbar hintereinander stehend zur Verfügung und werden so mit dem Gassentransporteur 4 zu der Verpackungsmaschine 5 transportiert.

Der Transporteur 3 und der Gassentransporteur 4 sind hier beispielsweise als Lineartransporteur mit einem Förderband ausgebildet, so dass die Behälter 2 darauf stehend transportiert werden. Oberhalb der durch die Förderbänder des Transporteurs 3 und des Gassentransporteurs 4 gebildeten Transportebene (oder Ebenen) sind die Führungselemente F₁ - F₁₃ angeordnet, die hier beispielsweise als Führungsbleche ausgebildet sind und senkrecht zu der Transportebene stehen. Denkbar ist auch, dass die Führungselemente F₁ - F₁₃ zueinander, insbesondere quer zur Transportrichtung T verstellbar sind, um die Vorrichtung 1 an unterschiedliche Behältergrößen anzupassen. Dazu können an dem Transporteur 3 und dem Gassentransporteur 4 vorzugsweise quer zur Transportrichtung T Querschienen vertikal oberhalb der Führungselemente F₁ - F₁₃ angeordnet sein, an denen die Führungselemente F₁ - F₁₃ über Klemmelemente angegliedert sind.

Denkbar ist auch, dass die Vorrichtung 1 zusätzlich noch eine hier nicht dargestellte Rütteleinrichtung umfasst, um die Behälter 2 des Behältermassenstroms M im Eindrängelbereich der Führungselemente F₁ - F₁₃ zu schütteln. Ebenso ist denkbar, dass die Vorrichtung 1 eine Vibrationseinrichtung umfasst, um die Führungselemente F₁ - F₁₃ wenigstens teilweise oszillierend zu bewegen. Dadurch wird eine Bewegung der Behälter 2 quer zur Transportrichtung T unterstützt, sodass sie leichter mit den Führungselementen F₁ - F₁₃ geführt werden können.

Mit der Verpackungsmaschine 5 werden die Behälter 2 der seriellen Behälterströme zu Gebinden verpackt und mit dem anschließenden Gebindetransporteur 7 beispielsweise zu Palettierung weitertransportiert.

Darüber hinaus ist die Steuerungseinheit 10 zu sehen, um den Transporteur 3 in einem Normalbetrieb derart zu steuern, dass die Behälter 2 des Behältermassenstroms M in der Transportrichtung T zu den Führungselementen F₁ - F₁₃ transportiert werden.

Die Steuerungseinheit 10 ist hier beispielsweise als Maschinensteuerung mit einem Mikroprozessor, Speicher, einen Bildschirm und einer Eingabeeinheit ausgebildet. Sie ist über hier nicht dargestellte Steuerleitungen mit dem Transporteur 3, dem Gassentransporteur 4, der Verpackungsmaschine 5 und dem Gebindetransporteur 7 verbunden, um diese Einheiten zu steuern.

Darüber hinaus ist im Eindrängelbereich der Führungselemente F₁ - F₁₃ die Erkennungseinrichtung 6 mit mehreren Zeilensensoren zu sehen. Die Zeilensensoren umfassen jeweils mehrere Lichtschranken, um die serielle Anordnung in den Behälterströmen zu erfassen und darüber eine Verklemmung zu erkennen, falls Lücken auftreten. Die Erkennungseinrichtung 6 ist über eine nicht dargestellte Signalleitung mit der Steuerungseinheit 10 verbunden, so dass darüber elektronische Signale der Erkennungseinrichtung 6 an die Steuerungseinheit 10 übermittelt werden können. Denkbar ist auch, dass die Erkennungseinrichtung 6 mit Reflexsensoren oder mit wenigstens einer Kamera ausgebildet ist.

Zudem ist denkbar, dass die Erkennungseinrichtung 6 für die Verklemmung gegenüber dem in den Fig. 2A - 2E dargestellten Bereich erweitert ist, so dass der komplette Behälterstrom von der ersten Aufteilung an den Führungselementen F₃ - F₆ bis hin zu den Einzelgassen G₄ - G₉ gleichzeitig überwacht wird. Dadurch kann die Erkennung noch zuverlässiger arbeiten.

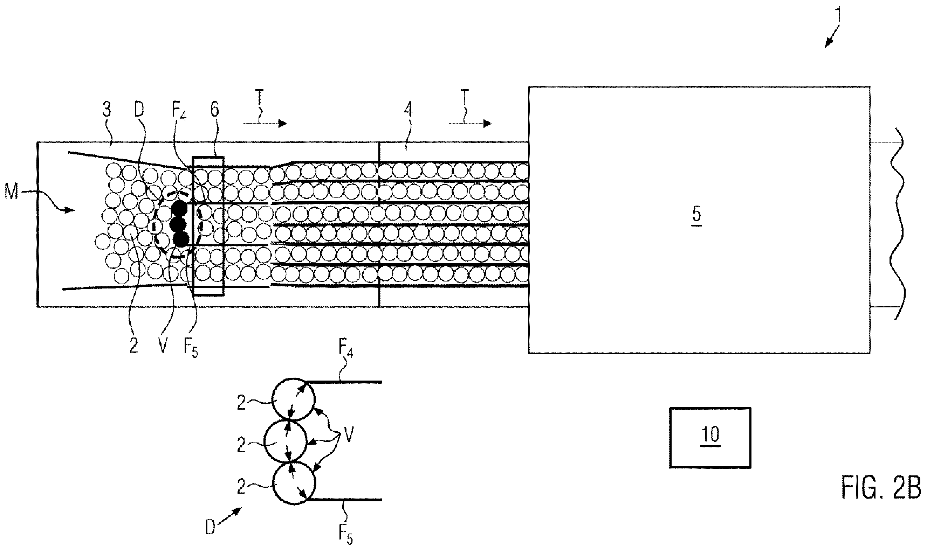

In den Figuren 2B - 2E ist zu sehen, wie mittels der Vorrichtung eine auftretende Verklemmung V der Behälter 2 des Behältermassenstroms M im Eindrängelbereich der Führungselemente F₁ - F₁₃ aufgelöst wird:
In der Figur 2B ist zu sehen, dass der Transporteur 3 im Normalbetrieb arbeitet und die Behälter 2 des Behältermassenstroms M in Transportrichtung T transportiert werden. Dabei hat sich in einem seltenen Fall im Eindrängelbereich der Führungselemente F₄ - F₅ eine Verklemmung V der Behälter 2 gebildet. Wie im Detail D zu sehen ist, werden zwei der Behälter 2 gegen die Führungselemente F₄ bzw. F₅ gedrückt und mit einem dritten Behälter 2 dazwischen verkeilt. Dabei verformen sich die Behälter 2 aufgrund des entstandenen Staudrucks, so dass sie sich nicht mehr entgegen der Transportbewegung des Transporteurs von den Führungselementen F₄ und F₅ lösen können und so die Verklemmung V bilden (die Kontaktpunkte der Behälter 2 sind jeweils mit Pfeilen gekennzeichnet).

Zudem bildet sich zwischen den beiden Führungselementen F₄ - F₅ eine Lücke im Behälterstrom, die mittels der Erkennungseinrichtung 6 als Verklemmung V erkannt wird. Sie gibt daraufhin ein entsprechendes Signal an die Steuerungseinheit 10 ab. Denkbar ist auch, dass sich die Verklemmung V der Behälter 2 an einer anderen Stelle im Eindrängelbereich der Führungselemente F₁ - F₁₃ bildet.

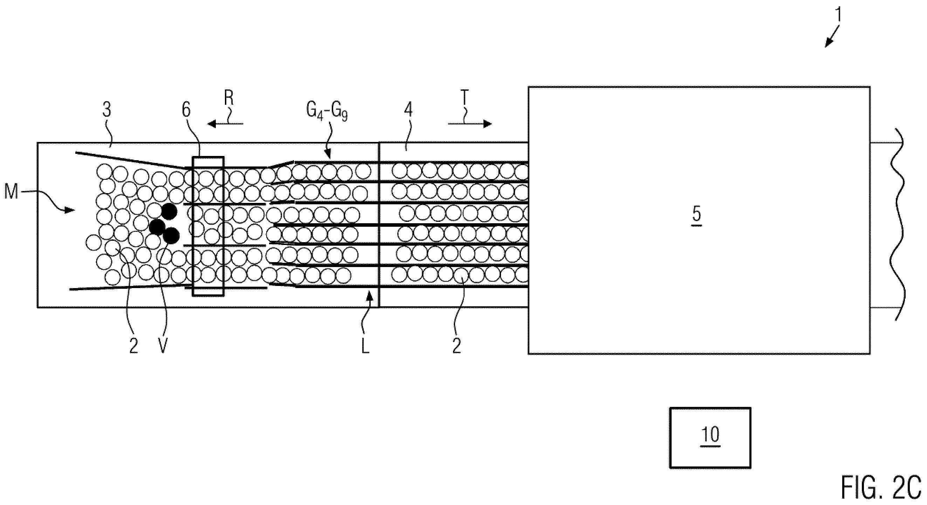

Wie in der Figur 2C zu sehen ist, wird daraufhin der Transporteur 3 mit der Steuerungseinheit 10 aufgrund der Verklemmung V für ein Zeitintervall, beispielsweise in einem Bereich von 0,1 - 2 Sekunden in einen Reversierbetrieb geschaltet, so dass die Behälter 2 des Behältermassenstroms M entgegen der Transportrichtung T, also in Richtung R rückwärts transportiert werden. Zu sehen ist, dass dadurch die Verklemmung V gelöst wird. Wie in Zusammenschau mit der Figur 2A erkennbar ist, werden die Behälter 2 auf dem Transporteur 3 aufgrund des Parallelversatzes nicht gegen den Behälterstrom auf dem Zubringertransporteur 8 gedrückt und dadurch besonders stark vom Transportdruck entlastet.

Darüber hinaus ist zu sehen, dass dabei die Behälter 2 in den nachfolgenden Gassen G₄ - G₉ sowohl rückwärts in der Richtung R als auch mit dem Gassentransporteur 4 vorwärts in Transportrichtung T transportiert werden. Dadurch entsteht eine Transportlücke L in den seriellen Behälterströmen der Gassen G₄ - G₉.

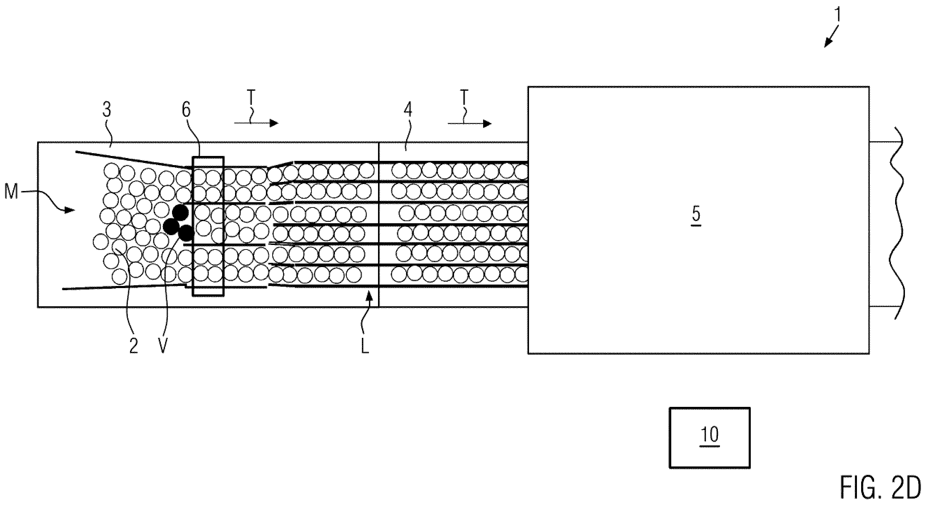

Nach Ablauf des Zeitintervalls wird nun, wie in der Figur 2D zu sehen, der Transporteur 3 mittels der Steuerungseinheit 10 in einen Schnellbetrieb geschaltet, bei dem die Behälter 2 des Behältermassenstroms M gegenüber dem in der Figur 2A dargestellten Normalbetrieb schneller in der Transportrichtung T transportiert werden, um die durch den Reversierbetrieb entstandene Transportlücke L des seriellen Behälterstroms zu schließen.

Alternativ und nicht Teil der Erfindung ist auch denkbar, dass der Gassentransporteur 4 während und/oder nach Ablauf des Zeitintervalls in einen Langsambetrieb geschaltet wird, bei dem die Behälter 2 in den Gassen G₄ - G₉ gegenüber dem in der Figur 2A dargestellten Normalbetrieb langsamer transportiert werden, um die durch den Reversierbetrieb entstandene Transportlücke L des seriellen Behälterstroms zu schließen.

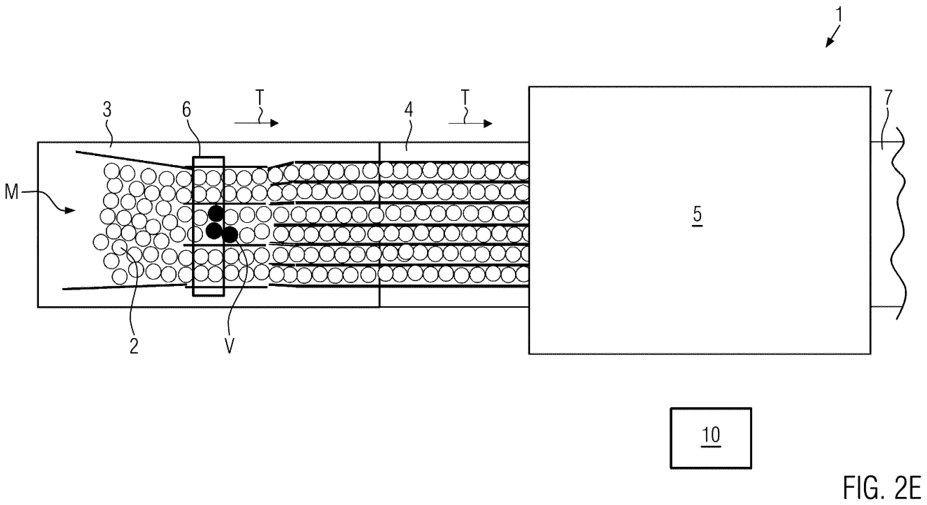

Wie in der Figur 2E zu sehen ist, haben sich nun die Behälter 2 der Verklemmung V wieder ordnungsgemäß eingereiht, sodass die Verklemmung V aufgelöst ist. Darüber hinaus ist zu sehen, dass die Transportlücke L geschlossen ist. Folglich kann der Transporteur 3 wieder in den Normalbetrieb geschaltet werden, bei dem die Behälter 2 des Behältermassenstroms M wieder in Transportrichtung T mit der normalen Transportgeschwindigkeit transportiert werden.

Dadurch, dass die Vorrichtung 1 die Erkennungseinrichtung 6 für die Verklemmung V der Behälter 2 im Eindrängelbereich der Führungselemente F₁ - F₁₃ umfasst, kann die Verklemmung V erkannt und darauf automatisch reagiert werden. Dadurch, dass die Steuereinrichtung 10 dazu ausgebildet ist, aufgrund der Verklemmung V den Transporteur 3 für das Zeitintervall in den Reversierbetrieb zu schalten, wird der Staudruck des Behältermassenstroms M gegen die Führungselemente F₁ - F₁₃ entlastet und die verklemmten Behälter 2, V werden ein Stück rückwärts transportiert. Dadurch wird die Verklemmung V automatisch gelöst, sodass die Behälter 2 des Behältermassenstroms M anschließend wieder ordnungsgemäß zu der wenigstens einen Gasse G₁ - G₉ geführt werden können. Folglich ist bei der erfindungsgemäßen Vorrichtung 1 keine Unterbrechung und kein manueller Eingriff einer Bedienperson notwendig, um die Verklemmung V zu lösen.

## Patentansprüche

1. Verfahren (100) zur Zuführung eines Behältermassenstroms (M) mit Behältern (2), insbesondere Kunststoffbehälter, auf wenigstens eine Gasse (G₁ - G₉),
wobei die Behälter (2) des Behältermassenstroms (M) in einem Normalbetrieb mit einem Transporteur (3) in einer Transportrichtung insbesondere stehend transportiert (101) und mit Führungselementen (F₁ - F₁₃) derart zu der wenigstens einen Gasse (G₁ - G₉) geführt werden, dass sie in der wenigstens einen Gasse (G₁ - G₉) jeweils als serieller Behälterstrom vorliegen (102),
wobei eine Verklemmung (V) der Behälter in einem Eindrängelbereich der Führungselemente (F₁ - F₁₃) mittelst einer Erkennungseinrichtung (6) erkannt wird (103),
wobei der Transporteur (3) aufgrund der Verklemmung (V) für ein Zeitintervall in einen Reversierbetrieb geschaltet wird, so dass die Behälter (2) des Behältermassenstroms (M) entgegen der Transportrichtung (T) transportiert werden, um die Verklemmung (V) zu lösen (104), und
wobei der Transporteur (3) nach Ablauf des Zeitintervalls wieder in den Normalbetrieb zurückgeschaltet wird, bei dem die Behälter (2) des Behältermassenstroms (M) mit dem Transporteur (3) wieder in der Transportrichtung (T) transportiert werden (107), **dadurch gekennzeichnet, dass**
der Transporteur (3) nach Ablauf des Zeitintervalls in einen Schnellbetrieb geschaltet wird, bei dem die Behälter (2) des Behältermassenstroms (M) gegenüber dem Normalbetrieb schneller transportiert werden, um eine durch den Reversierbetrieb entstandene Transportlücke (L) des seriellen Behälterstroms und/oder des Behältermassenstroms zu schließen (105) , wobei das Zeitintervall in einem Bereich von 0,1 - 2 Sekunden, insbesondere in einem Bereich von 0,1 - 1 Sekunde liegt und/oder wobei das Zeitintervall einer vordefinierten Wegstrecke in einem Bereich von 0,01 - 1 Meter entspricht, die die Behälter (2) im Reversierbetrieb zurücklegen, insbesondere in einem Bereich von 0,01 - 0,5 Meter.

2. Verfahren (100) nach Anspruch 1, wobei nach dem Zurückschalten in den Normalbetrieb mit der Erkennungseinrichtung (6) erkannt wird, ob sich die Verklemmung (V) der Behälter (2) im Eindrängelbereich der Führungselemente (F₁ - F₁₃) gelöst hat und der Transporteur (3) für wenigstens ein weiteres Zeitintervall in den Reversierbetrieb geschaltet wird, um die Verklemmung (V) zu lösen.

3. Verfahren (100) nach Anspruch 1 oder 2, wobei ein Gassentransporteur (4) während und/oder nach Ablauf des Zeitintervalls in einen Langsambetrieb geschaltet wird, bei dem die Behälter (2) in der wenigstens einen Gasse (G₁ - G₉) gegenüber einem Normalbetrieb langsamer transportiert werden, um eine durch den Reversierbetrieb entstandene Transportlücke (L) des seriellen Behälterstroms und/oder des Behältermassenstroms zu schließen (106).

4. Verfahren (100) nach einem der vorangegangenen Ansprüche, wobei die Verklemmung (V) mit einem Zeilensensor, einem Reflexsensor und/oder einer Kamera der Erkennungseinrichtung (6) erkannt wird.

5. Verfahren (100) nach einem der vorangegangenen Ansprüche, wobei die Behälter (2) des Behältermassenstroms (M) im Eindrängelbereich der Führungselemente (F₁ - F₁₃) mit einer Rütteleinrichtung geschüttelt werden und/oder die Führungselemente (F₁ - F₁₃) mit einer Vibrationseinrichtung oszillierend bewegt werden, um die Zuführung der Behälter (2) zu der wenigstens einen Gasse (G₁ - G₉) zu unterstützen.

6. Verfahren (100) nach einem der vorangegangenen Ansprüche, wobei die Behälter (2) des Behältermassenstroms (M) im Eindrängelbereich (F₁ - F₁₃) der Führungselemente mit dem Transporteur (3) linear transportiert werden.

7. Verfahren (100) nach einem der vorangegangenen Ansprüche, wobei die Behälter (2) über die wenigstens eine Gasse (G₁ - G₉) einer Verpackungsmaschine (5) zugeführt wird.

8. Vorrichtung (1) zur Zuführung eines Behältermassenstroms (M) mit Behältern (2), insbesondere Kunststoffbehältern, auf wenigstens eine Gasse (G₁ - G₉) , mit
einem Transporteur (3) zum Transport der Behälter (2) des Behältermassenstroms (M), Führungselementen (F₁ - F₁₃), um die Behälter (2) des Behältermassenstroms (M) zu der wenigstens eine Gasse (G₁ - G₉) zu führen, so dass sie in der wenigstens einen Gasse (G₁ - G₉) jeweils als serieller Behälterstrom vorliegen, und
mit einer Steuerungseinheit (10), um den Transporteur (3) in einem Normalbetrieb derart zu steuern, dass die Behälter (2) des Behältermassenstroms (M) in einer Transportrichtung (T) zu den Führungselementen (F₁ - F₁₃) hin transportiert werden, wobei die Vorrichtung eine Erkennungseinrichtung (6) für eine Verklemmung (V) der Behälter (2) des Behältermassenstroms (M) im Eindrängelbereich der Führungselemente (F₁ - F₁₃) aufweist,
wobei die Steuerungseinheit (10) dazu ausgebildet ist, aufgrund der Verklemmung (V) den Transporteur (3) für ein Zeitintervall in einen Reversierbetrieb zu schalten, so dass die Behälter (2) des Behältermassenstroms (M) entgegen der Transportrichtung (T) transportiert werden, um die Verklemmung (V) zu lösen, und
wobei die Steuerungseinheit (10) dazu ausgebildet ist, den Transporteur (3) nach Ablauf des Zeitintervalls wieder in den Normalbetrieb zurückzuschalten, so dass die Behälter (2) des Behältermassenstroms (M) mit dem Transporteur (3) wieder in der Transportrichtung transportiert werden,
**dadurch gekennzeichnet, dass**
die Steuerungseinheit (10) dazu ausgebildet ist, den Transporteur (3) nach Ablauf des Zeitintervalls in einen Schnellbetrieb zu schalten, so dass die Behälter (2) des Behältermassenstroms (M) gegenüber dem Normalbetrieb schneller transportiert werden, um eine durch den Reversierbetrieb entstandene Transportlücke (L) des seriellen Behälterstroms und/oder des Behältermassenstroms (M) zu schließen, wobei das Zeitintervall in einem Bereich von 0,1 - 2 Sekunden, insbesondere in einem Bereich von 0,1 - 1 Sekunde liegt und/oder wobei das Zeitintervall einer vordefinierten Wegstrecke in einem Bereich von 0,01 - 1 Meter entspricht, die die Behälter (2) im Reversierbetrieb zurücklegen, insbesondere in einem Bereich von 0,01 - 0,5 Meter.

9. Vorrichtung (1) nach Anspruch 8, wobei die Vorrichtung (1) eine Verpackungsmaschine (5) umfasst, und wobei die wenigstens eine Gasse (G₁ - G₉) in einem Zulauf der Verpackungsmaschine (5) angeordnet ist.

10. Vorrichtung (1) nach Anspruch 8 oder 9, wobei der Transporteur (3) im Eindrängelbereich der Führungselemente (F₁ - F₁₃) als Lineartransporteur ausgebildet ist.

11. Vorrichtung (1) nach einem der Ansprüche 8-10, wobei die Erkennungseinrichtung (6) einen Zeilensensor, einen Reflexsensor oder eine Kamera umfasst, um die Verklemmung (V) zu erkennen.

12. Vorrichtung (1) nach einem der Ansprüche 8-11, wobei die Vorrichtung (1) eine Rütteleinrichtung umfasst, um die Behälter (2) des Behältermassenstroms (M) im Eindrängelbereich der Führungselemente (F₁ - F₁₃) zu schütteln.

13. Vorrichtung (1) nach einem der Ansprüche 8-12, wobei die Vorrichtung (1) eine Vibrationseinrichtung umfasst, um die Führungselemente (F₁ - F₁₃) oszillierend zu bewegen.

## Claims

1. A method (100) for feeding a container mass flow (M) comprising containers (2), in particular plastic containers, into at least one lane (G₁ - G₉), wherein, during normal operating mode, the containers (2) of the container mass flow (M) are transported (101), in particular in an upright position, by means of a conveyor (3) in a transport direction (T) and are guided by guide elements (F₁ - F₁₃) toward the at least one lane (G₁- G₉) in such a manner that they are present in the respective at least one lane (G₁ - G₉) as a serial container flow (102),
wherein a jamming (V) of the containers in a lane-entry region of the guide elements (F₁ - F₁₃) is detected (103) by means of a detection device (6), wherein, in response to the clamping (V), the conveyor (3) is switched into a reverse operating mode for a time interval such that the containers (2) of the container mass flow (M) are transported counter to the transport direction (T) in order to release the jamming (V) (104), and wherein, upon expiry of the time interval, the conveyor (3) is switched back into the normal operating mode in which the containers (2) of the container mass flow (M) are again transported by the conveyor (3) in the transport direction (T) (107),
**characterized in that**
upon expiry of the time interval the conveyor (3) is switched into a high-speed operating mode in which the containers (2) of the container mass flow (M) are transported at a higher speed than in the normal operating mode in order to close a transport gap (L) in the serial container flow and/or in the container mass flow caused by the reverse operating mode (105), wherein the time interval is in a range of 0.1 to 2 seconds, in particular in a range of 0.1 to 1 second, and/or wherein the time interval corresponds to a predefined travel distance in a range of 0.01 to 1 meter travelled by the containers (2) in the reverse operating mode, in particular in a range of 0.01 to 0.5 meter.

2. Method (100) according to claim 1, wherein, after switching back into the normal operating mode, it is detected by means of the detection device (6) whether the jamming (V) of the containers (2) in the lane-entry region of the guide elements (F₁-F₁₃) has been released, and wherein the conveyor (3) is switched into the reverse operating mode for at least one further time interval in order to release the jamming (V).

3. Method (100) according to claim 1 or 2, wherein a lane conveyor (4), during and/or upon expiry of the time interval, is switched into a reduced-speed operating mode in which the containers (2) in the at least one lane (G₁ - G₉) are transported more slowly than in a normal operating mode in order to close a transport gap (L) in the serial container flow and/or in the container mass flow caused by the reverse operating mode (106).

4. Method (100) according to any one of the preceding claims, wherein the jamming (V) is detected by a line sensor, a reflective sensor and/or a camera of the detection device (6).

5. Method (100) according to any one of the preceding claims, wherein the containers (2) of the container mass flow (M) are shaken in the lane-entry region of the guide elements (F₁ - F₁₃) by means of a shaking device and/or the guide elements (F₁ - F₁₃) are oscillated by means of a vibration device in order to assist the feeding of the containers (2) into the at least one lane (G₁ - G₉).

6. Method (100) according to any one of the preceding claims, wherein the containers (2) of the container mass flow (M) are transported linearly by the conveyor (3) in the lane-entry region of the guide elements (F₁ - F₁₃).

7. Method (100) according to any one of the preceding claims, wherein the containers (2) are fed via the at least one lane (G₁ - G₉) to a packaging machine (5).

8. Device (1) for feeding a container mass flow (M) comprising containers (2), in particular plastic containers, into at least one lane (G₁ - G₉), comprising a conveyor (3) for transporting the containers (2) of the container mass flow (M), guide elements (F₁ - F₁₃) for guiding the containers (2) of the container mass flow (M) toward the at least one lane (G₁ - G₉) such that they are present in the respective at least one lane (G₁ - G₉) as a serial container flow, and a control unit (10) configured to control the conveyor (3) in a normal operating mode such that the containers (2) of the container mass flow (M) are transported in a transport direction (T) toward the guide elements (F₁ - F₁₃), wherein the device comprises a detection device (6) for detecting a jamming (V) of the containers (2) of the container mass flow (M) in a lane-entry region of the guide elements (F₁ - F₁₃), wherein the control unit (10) is configured, in response to the jamming (V), to switch the conveyor (3) into a reverse operating mode for a time interval such that the containers (2) of the container mass flow (M) are transported counter to the transport direction (T) in order to release the jamming (V), and wherein the control unit (10) is configured to switch the conveyor (3), upon expiry of the time interval, back into the normal operating mode such that the containers (2) of the container mass flow (M) are again transported by the conveyor (3) in the transport direction (T),
**characterized in that**
the control unit (10) is configured to switch the conveyor (3), upon expiry of the time interval, into a high-speed operating mode such that the containers (2) of the container mass flow (M) are transported at a higher speed than in the normal operating mode in order to close a transport gap (L) in the serial container flow and/or in the container mass flow (M) caused by the reverse operating mode, wherein the time interval is in a range of 0.1 to 2 seconds, in particular in a range of 0.1 to 1 second, and/or wherein the time interval corresponds to a predefined travel distance in a range of 0.01 to 1 meter travelled by the containers (2) in the reverse operating mode, in particular in a range of 0.01 to 0.5 meter.

9. Device (1) according to claim 8, wherein the device (1) comprises a packaging machine (5), and wherein the at least one lane (G₁ - G₉) is arranged in an infeed of the packaging machine (5).

10. Device (1) according to claim 8 or 9, wherein the conveyor (3) is configured as a linear conveyor in the lane-entry region of the guide elements (F₁ - F₁₃).

11. Device (1) according to any one of claims 8 to 10, wherein the detection device (6) comprises a line sensor, a reflective sensor or a camera for detecting the jamming (V).

12. Device (1) according to any one of claims 8 to 11, wherein the device (1) comprises a shaking device for shaking the containers (2) of the container mass flow (M) in the lane-entry region of the guide elements (F₁ - F₁₃).

13. Device (1) according to any one of claims 8 to 12, wherein the device (1) comprises a vibration device for oscillating the guide elements (F₁ - F₁₃).

## Revendications

1. Procédé (100) permettant d'acheminer un flux massique de récipients (M) comprenant des récipients (2), en particulier des récipients en plastique, sur au moins une voie (G₁ à G₉), dans lequel les récipients (2) du flux massique de récipients (M) sont transportés (101), en particulier debout, en fonctionnement normal avec un transporteur (3) dans une direction de transport et sont guidés grâce à des éléments de guidage (F₁ à F₁₃) vers la au moins une voie (G₁ à G₉) de telle manière qu'ils sont présents dans la au moins une voie (G₁ à G₉) respectivement sous forme de flux sériel de récipients (102),
dans lequel un blocage (V) des récipients dans une région de restriction des éléments de guidage (F₁ à F₁₃) est détecté (103) au moyen d'un dispositif de détection (6), dans lequel le transporteur (3) est commuté en fonctionnement inversé pendant un intervalle de temps en raison du blocage (V), de sorte que les récipients (2) du flux massique de récipients (M) sont transportés dans la direction opposée à la direction de transport (T) afin de lever le blocage (V), et
dans lequel le transporteur (3), à l'expiration de l'intervalle de temps, est remis en fonctionnement normal selon lequel les récipients (2) du flux massique de récipients (M) sont à nouveau transportés avec le transporteur (3) dans la direction de transport (T),
**caractérisé en ce que**
le transporteur (3), après l'expiration de l'intervalle de temps, est commuté en fonctionnement rapide selon lequel les récipients (2) du flux massique de récipients (M) sont transportés plus rapidement qu'en fonctionnement normal afin de combler un vide de transport (L) du flux sériel de récipients en série et/ou du flux massique de récipients résultant du fonctionnement inversé (105), dans lequel l'intervalle de temps se situe dans une plage comprise entre 0,1 et 2 secondes, en particulier dans une plage comprise entre 0,1 et 1 seconde et/ou dans lequel l'intervalle de temps correspond à une distance prédéfinie dans une plage comprise entre 0,01 et 1 mètre, que les récipients (2) parcourent en fonctionnement inversé, en particulier dans une plage comprise entre 0,01 et 0,5 mètre.

2. Procédé (100) selon la revendication 1, dans lequel, après la remise en fonctionnement normal, le dispositif de détection (6) détecte si le blocage (V) des récipients (2) a été levé dans la région de restriction des éléments de guidage (F₁ à F₁₃) et le transporteur (3) est commuté en fonctionnement inversé pendant au moins un intervalle de temps supplémentaire afin de lever le blocage (V).

3. Procédé (100) selon la revendication 1 ou 2, dans lequel un transporteur de voie (4), pendant et/ou après l'expiration de l'intervalle de temps, est commuté en fonctionnement lent selon lequel les récipients (2) sont transportés plus lentement dans la au moins une voie (G₁ à G₉) par rapport à un fonctionnement normal afin de combler (106) un vide de transport (L) du flux sériel de récipients et/ou du flux massique de récipients résultant du fonctionnement inversé.

4. Procédé (100) selon l'une quelconque des revendications précédentes, dans lequel le blocage (V) est détecté par un capteur linéaire, un capteur réflex et/ou une caméra du dispositif de détection (6).

5. Procédé (100) selon l'une quelconque des revendications précédentes, dans lequel les récipients (2) du flux massique de récipients (M) sont secoués dans la région de restriction des éléments de guidage (F₁ à F₁₃) à l'aide d'un dispositif de secouage et/ou les éléments de guidage (F₁ à F₁₃) sont déplacés de manière oscillante avec un dispositif vibrant afin de faciliter l'acheminement des récipients (2) vers la au moins une voie (G₁ à G₉).

6. Procédé (100) selon l'une quelconque des revendications précédentes, dans lequel les récipients (2) du flux massique de récipients (M) sont transportés de manière linéaire par le transporteur (3) dans la région de restriction (F₁ à F₁₃) des éléments de guidage.

7. Procédé (100) selon l'une quelconque des revendications précédentes, dans lequel les récipients (2) sont acheminés sur la au moins une voie (G₁ à G₉) jusqu'à une machine d'emballage (5).

8. Dispositif (1) permettant d'acheminer un flux massique de récipients (M) comprenant des récipients (2), en particulier des récipients en plastique, sur au moins une voie (G₁ à G₉), comprenant
un transporteur (3) permettant de transporter les récipients (2) du flux massique de récipients (M),
des éléments de guidage (F₁ à F₁₃) afin de guider les récipients (2) du flux massique de récipients (M) vers la au moins une voie (G₁ à G₉) de sorte qu'ils sont respectivement présents sous forme de flux sériel de récipients dans la au moins une voie (G₁ à G₉), et
une unité de commande (10) afin de commander le transporteur (3) en fonctionnement normal de telle manière que les récipients (2) du flux massique de récipients (M) sont transportés dans une direction de transport (T) vers les éléments de guidage (F₁ à F₁₃),
dans lequel le dispositif présente un dispositif de détection (6) en vue d'un blocage (V) des récipients (2) du flux massique de récipients (M) dans la région de restriction des éléments de guidage (F₁ à F₁₃),
dans lequel l'unité de commande (10) est conçue pour commuter le transporteur (3) en fonctionnement inversé pendant un intervalle de temps en raison du blocage (V), de sorte que les récipients (2) du flux massique de récipients (M) sont transportés dans la direction opposée à la direction de transport (T) afin de lever le blocage (V), et dans lequel l'unité de commande (10) est conçue pour remettre le transporteur (3) en fonctionnement normal après l'expiration de l'intervalle de temps, de sorte que les récipients (2) du flux massique de récipients (M) sont de nouveau transportés par le transporteur (3) dans la direction de transport,
**caractérisé en ce que**
l'unité de commande (3) est conçue pour, après l'expiration de l'intervalle de temps, commuter le transporteur (3) en fonctionnement rapide, de sorte que les récipients (2) du flux massique de récipients (M) sont transportés plus rapidement qu'en fonctionnement normal afin de combler un vide de transport (L) du flux sériel de récipients en série et/ou du flux massique de récipients résultant du fonctionnement inversé (105), dans lequel l'intervalle de temps se situe dans une plage comprise entre 0,1 et 2 secondes, en particulier dans une plage comprise entre 0,1 et 1 seconde et/ou dans lequel l'intervalle de temps correspond à une distance prédéfinie dans une plage comprise entre 0,01 et 1 mètre, que les récipients (2) parcourent en fonctionnement inversé, en particulier dans une plage comprise entre 0,01 et 0,5 mètre.

9. Dispositif (1) selon la revendication 8, dans lequel le dispositif (1) comprend une machine d'emballage (5) et dans lequel la au moins une voie (G₁ à G₉) est agencée dans une entrée de la machine d'emballage (5).

10. Dispositif (1) selon la revendication 8 ou 9, dans lequel le transporteur (3) est conçu comme un transporteur linéaire dans la région de restriction des éléments de guidage (F₁ à F₁₃).

11. Dispositif (1) selon l'une quelconque des revendications 8 à 10, dans lequel le dispositif de détection (6) comprend un capteur linéaire, un capteur réflex ou une caméra, afin de détecter le blocage (V).

12. Dispositif (1) selon l'une quelconque des revendications 8 à 11, dans lequel le dispositif (1) comprend un dispositif de secouage afin de secouer les récipients (2) du flux massique de récipients (M) dans la région de restriction des éléments de guidage (F₁ à F₁₃).

13. Dispositif (1) selon l'une quelconque des revendications 8 à 12, dans lequel le dispositif (1) comprend un dispositif vibrant afin de déplacer les éléments de guidage (F₁ à F₁₃) de manière oscillante.
